# EUROPEAN PATENT APPLICATION

(11) **EP 2 492 855 A1**
(43) Date of publication of application: **29.08.2012**
(21) Application number: 12153070.3
(22) Date of filing: 30.01.2012
(51) Int. Cl.: G06Q 10/06

(54) **Coupling analytics and transaction tasks**

(30) Priority: 31.01.2011 US 201113018141
(71) Applicant: SAP AG, 69190 Walldorf (DE)
(72) Inventor: Sorin, Alexander, 69190 Walldorf (DE); Makanawala, Prerna, 69190 Walldorf (DE); Sawant, Sandesh, 69190 Walldorf (DE); Shiroor, Kedar, 69190 Walldorf (DE)
(74) Representative: Richardt Patentanwälte GbR

(57) **Abstract**

A set of data objects (131, 132, 133) is identified satisfying a search query associated with an application adapted to perform a set of transactions on the data objects (131, 132, 133). A plurality of common attributes (212) are identified, each shared by at least two objects in the set of data objects (131, 132, 133). A graphical analytics viewer (134, 135, 414, 415, 424, 435) is dynamically selected from a plurality of viewers each adapted to present a representation of data objects (131, 132, 133) according to a corresponding analytics scheme. The selected viewer is selected for presentation in a graphical user interface (160, 161) based on identifying that the viewer has an analytics scheme related to one of the common attributes. Presentation of the selected viewer (134, 135, 414, 415, 424, 435) includes a selectable graphical representation of each data object (131, 132, 133) in the set of data objects (131, 132, 133). At least one of the graphical representations (518, 519, 530) is selected and a transaction from the set of transactions initiated on the data object (131, 132, 133) corresponding to the selected graphical representation (518, 519, 530).

## Description

### TECHNICAL FIELD

This present disclosure relates to providing analytics support for a set of data objects, and more particularly to coupling analytics tools to functionality of one or more software applications adapted to perform transaction tasks on data objects.

### BACKGROUND

Analytics is the science of analysis, and modern analytics systems exist applying computer technology to solve problems in business and industry using statistical and graphical analysis. Applications of analytics can include the study and mining of business data using statistical analysis and mathematics to discover and understand historical patterns in an effort to predict and improve future business performance. Analytics can include operations research, enterprise decision management, marketing analytics, predictive science, strategy science, credit risk analysis, and fraud analytics. Existing analytical processing technologies exist including online analytical processing, or "OLAP." Typical applications of OLAP include business reporting for sales, marketing, management reporting, business process management, budgeting and forecasting, and financial reporting.

Modern business computing environments, and business software implemented in the environments, can provide useful support to business users. For instance, enterprise software systems exist including resource planning, human resources, supply chain management, client management, and other applications providing functionality supporting corresponding business scenarios. One example of a modern enterprise software system is SAP's Business Suite, utilizing service-oriented architecture (SOA) to serve industry-specific application modules to service consumers.

### SUMMARY

It is an objective of embodiments of the invention to provide for an improved computer-implemented method for coupling analytics with transactional tasks within a software application. Said objectives are solved by the subject matter of the independent claims, advantageous embodiments are described in the dependent claims.

This disclosure provides various embodiments for coupling analytics with transactional tasks within a software computing environment. A set of data objects in a corpus of data objects can be identified that satisfy a particular user search query entered in connection with a particular software application adapted to perform a set of transactions on data objects in the corpus of data objects. A plurality of common attributes can be identified, each common attribute shared by at least two data objects in the set of data objects. An interactive menu of a set of attributes in the identified plurality of common attributes can be presented in a first portion of a graphical user interface of a computing device. At least one particular graphical analytics viewer can be dynamically selected from a plurality of graphical analytics viewers for presentation in a second portion of the graphical user interface of the computing device, each graphical analytics viewer in the plurality of graphical analytics viewers adapted to present a representation of data objects according to a particular analytics scheme of the graphical analytics viewer. The particular at least one graphical analytics viewer can be identified as having an analytics scheme related to at least one attribute included in the set of attributes. Presentation of the at least one particular graphical analytics viewer can be provided, the presentation including a graphical representation of each data object in the set of data objects according to the analytics scheme of the particular graphical analytics viewer, each representation of a data object selectable by a user through the graphical user interface. A user selection can be received of a particular representation of a particular data object included in the presentation of the at least one particular graphical analytics viewer. A user request can be received to initiate at least one particular transaction in the set of transactions on the selected particular data object. The at least one particular transaction can be initiated on the particular data object by the particular software application.

While generally described as computer implemented software that processes and transforms the respective data, some or all of the aspects may be computer implemented methods or further included in respective systems or other devices for performing this described functionality. The details of these and other aspects and embodiments of the present disclosure are set forth in the accompanying drawings and the description below. Other features, objects, and advantages of the disclosure will be apparent from the description and drawings, and from the claims.

### DESCRIPTION OF DRAWINGS

The above and other items, features and advantages of the invention will be better understood by reading the following more particular description of embodiments of the invention in conjunction with the figures wherein:
FIG. 1 illustrates an example system including a transaction assistance framework.
FIG. 2 is a schematic representation of one business object architecture for use by an appropriate system, such as the system described in FIG. 1.
FIG. 3 is a flowchart of an example technique for launching a transactional task from an analytics viewer.
FIGS. 4A-4H are example screenshots of a user interface of a transaction assistance framework including one or more analytics viewers in a first example.
FIG. 5A-5E are example screenshots of a user interface of a transaction assistance framework including one or more analytics viewers in a second example.

Like reference symbols in the various drawings indicate like elements.

### DETAILED DESCRIPTION

In typical business software systems, business analytics tools are quite complex and often require the expertise of dedicated analysts. Modern business software provides functionality and tasks allowing business users to perform what once were complicated and overly technical tasks. However, many business decisions and scenarios supported by business software tools rely on or are based on analytical data and analytics assessments. In such cases, business users delay action pending the receipt of such data, often from other personnel tasked with mastering analytics tools and gathering the analytical and support data requested by the business user. However, in a modern, fast-paced economy, business data can change rapidly in response to events within the marketplace and internally within an organization. Consequently, the turnaround time between a business user's request for analytical data and the receipt of that data can be unacceptably slow, as well as expensive. A transactional assistance framework can be used to integrate business software functionality with analytics relating to data objects that are to be the subject of transactional tasks implemented using the business software. Further, the transactional assistance framework can be reusable by multiple different, even unrelated, business tools and software and dynamically respond to varying data object types and content to intelligently provide the user with intuitive analytics presentations that can be relied upon in a user's decision to launch a particular transaction.

A "data object" as understood herein may encompass any entity that can be manipulated by the commands of a programming language, such as a value, variable, function, or data structure.

Typically a data object has to be firstly declared in a program code. Usually, data objects are not persistent. In other words, data objects may only exist while the program is being executed.

In contrast, "persistent data" exist also while the program is not being executed. Persistent Data usually denotes information that is infrequently accessed and not likely to be modified. Thus persistent data may be stored in permanent database tables in databases or in a sequential file.

Before persistent data (such as data from a database table or from a sequential file) can be processed, the persistent data has to be read into one or more data objects first. After transformation of the persistent data into data objects the persistent data can be modified or overwritten automatically by execution of program code.

Apart from a definition of formal parameters for an applying subroutine, thus generating interface parameters of procedures of the applying subroutine, the data objects in an object-oriented program or procedure have to be declared in the declaration part of the corresponding program code. These declarative statements establish the data type of the object, along with technical attributes such as field length, number of decimal places, data type.

Within a subroutine, the formal parameters may behave like dynamic local data. They mask global data objects with the same name. Thus the interface parameters of the procedures are generated as local data objects, but only when the procedure is actually called.

The definition of the interface parameters and the declaration of the data objects take place before the program is actually executed. The technical attributes can then be queried while the program is running. Then the data object's content can be addressed and interpreted by the program.

The technical attributes of the interface parameters can be defined in the procedure itself. If not, they adopt the attributes of the parameters from which they receive their values. The value of the parameters at the start of the subroutine is the value passed from the corresponding actual parameter.

If the contents of a data object have to be retained beyond the end of the program, the contents of a data object has to be saved it in a persistent form.

A data object may be a part of a repository. In a repository contents and metadata are saved and/or provided. Depending on use, repositories act as a data source or as a data storage.

Above-mentioned transactional assistance framework comprises an in-memory tool or an in-memory program. It uses and/or reuses data which are kept in an in-memory-structure. For example, data of a previous process could be kept in a RAM (Random-Access-Memory) for a further processing by a successive sequence of processes underlying a set of following transactions. Keeping data for processing a sequence of e.g. transactions in an in-memory structure, shortens latency time experienced by the user by minimizing access time to data objects. In-memory architecture of data objects may increase the performance of the transactional assistance framework significantly. RAM access of data may be accelerated significantly, such as by a factor lying in a range around thousand of times quicker than a database access of data. The transactional assistance framework in the form of an in-memory tool, e.g. a RAM-based application, works faster than a disk-base application, which is a big plus for users. In any embodiment in the form of a RAM-based application the transactional assistance framework is likely to be at least an order of magnitude faster than even a very well optimized disk-based application.

The in-memory architecture of the transactional assistance framework may have the advantage of bigger ease for the in-memory application in re-structuring dynamically and/or recalculating on-the-fly. This may imply a great flexibility in any combination of transactions. Because of a shortening of time for re-structuring and recalculation the in-memory application could combine different types of transactions and processes within a workflow. Even different types of transactions of different applications and/or software modules could be integrated more quickly, resulting in a significant acceleration of the performance of a defined process chain.

So the data kept in an in-memory structure could be used by the transactional assistance framework simultaneously for normal transactions as well as for analysis purposes. By use of the in-memory structure of data objects, where the data need not to be written back to a database and then again be retrieved by the tool, the transactional assistance framework allows an integration of transactional and analytical data, meaning that the same data objects are used for a transaction and an analysis. Data from transaction can be reviewed by analytical visualizing features in one framework. There is no need to start a different application to start an analysis or a transaction of data. So the number of process steps for the user will be reduced.

There is also no need to retrieve data from multiple database in which the retrieved data usually need to undergo a process of normalization, a process which takes a long time. The transactional assistance framework, in contrast, combines the transactional space with the analytical space and vice versa. Herein a normalization of transactional and analytical data is not necessary. In the transactional assistance framework transactional data can be accessed directly for any analysis. Data exploration and transaction on data can be combined according to the user's need in one framework. In the transactional assistance framework the user gets immediately information about the previous transaction on the data objects and can use this information to initiate the next transaction on the data objects. The user's transactions will thereby become more goal-oriented.

By retrieving the data not from one or more databases but from one or more in-memory structures, the transactional assistance framework provides transactional and analytical data in real-time mode. The speed of data retrieval from one or more memory structures is thousand times faster than a retrieval from one or more databases.

The in-memory architecture of the transactional assistance framework also involves more ease and comfort in the development of the tool. In general in-memory tools are simpler to build than disk-based tools though data need to be kept as compactly as possible. This ease of development saves time and effort in the development process. Consulting costs are also reduced.

A "transaction" as understood herein may encompass any functional action initiated by an application user within a module of a software application in order to change the value and/or contents of transactional data and/or the relation between the transactional data.

In this disclosure the transactional data are the data objects which are kept recallable and thus dynamically in the in-memory structure for a reuse by different types of procedures including the above-mentioned "transactions" as well as an interactive initiation by user or by the software tool to provide an "analysis" and of selected data objects.

"Analytics" as understood herein may encompass an evaluation of selected data objects according to a predefined analytics scheme, wherein the analysis process results in a graphical representation of the evaluation of selected data objects. The predefined analysis scheme may be organized according to a selection of at least one attribute or any combination of at least two selected attributes.

An "attribute" as understood herein may encompass a characteristic and/or a feature which is logically associated with a data object. In some embodiments attributes may be implemented as object metadata. An attribute may have associated data defining the value of the attribute.

A "corpus" of data objects as understood herein may encompass a set of data objects which may be maintained on computing devices local to or remote from a software application. A subset of the corpus of data objects could be retrieved by a user's request for data objects according to selected attributes.

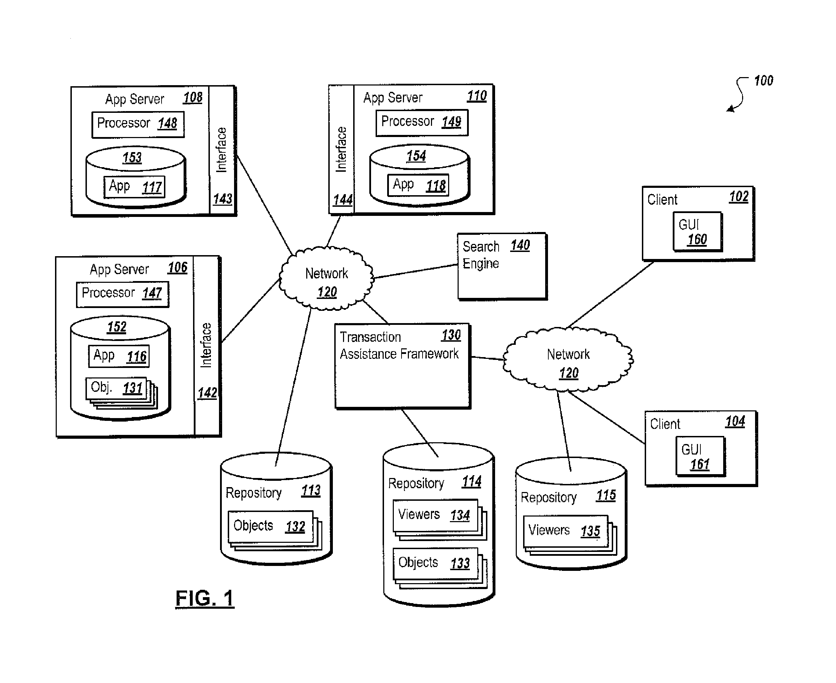

Turning to the example implementation of FIG. 1, the illustrated software environment 100 includes, or is communicably coupled with, one or more clients 102, 104, one or more application servers (e.g., 106, 108, 110), such as application servers within an enterprise software environment, a transaction assistance framework 130, search engine 140, and one or more data repositories 114, 115, using one or more networks 120. Each of the servers 106, 108, 110, as well as computing devices implementing transaction assistance framework 130 and search engine 140, comprise electronic computing devices operable to receive, transmit, process, store, or manage data and information associated with the software environment 100. As used in this document, the term "computer" is intended to encompass any suitable processing device. For example, the environment 100 may be implemented using computers other than servers, including a server pool. Further, any, all, or some of the servers 106, 108, 110 may be adapted to execute any operating system, including Linux, UNIX, Windows Server, or any other suitable operating system.

In the example embodiment illustrated in FIG. 1, the transaction assistance framework 130 can be implemented using one or more computing devices to provide an integrated framework for coupling search, analytics, and transactional task launching through any one of a plurality of software applications or services (e.g., 116, 117, 118) hosted by computing devices local or remote to the transaction assistance framework 130. The transaction assistance framework 130 can be used in connection with on demand as well as on premise software services. Interactive analytics presentations can be generated using the transaction assistance framework 130 through the dynamic selection of one or more interactive graphical analytics viewers (e.g., 134, 135) available for use by the transaction assistance framework 130. Graphical analytics viewers can be maintained or stored locally at computing devices implementing the transaction assistance framework 130 or by remote computing devices and data repositories (e.g., 113, 114, 115). Each graphical analytics viewer 134, 135 can include logic for rendering a graphical analytics presentation according to a particular analytics scheme. For instance, analytics schemes can pertain to the mathematical or graphic methods used to present analyses of data to a user. For example, graphical analytics viewers can include timeline viewers, geographical map viewers, radar graph viewers, pie chart viewers, table viewers, e-commerce UI viewers, column and bar chart viewers, bubble chart viewers, among other viewer with corresponding analytics schemes. Graphical analytics viewers can be developed and implemented using any suitable graphic generation platform, including, but not limited to, Java, Flex, AJAX, and other platforms. The search functionality of the transaction assistance framework 130 can be provided using a search engine 140 to search a corpus of data objects maintained on computing devices local to or remote from the transaction assistance framework 130. The search engine 140 can be integrated with the transaction assistance framework 130 or provided as a service over a network 120 through one or more remote client computing devices. In some instances, search engine 140 can be federation of search engines adapted to perform federated searches of multiple resources. Search results generated by the search engine 140 can be dependent on the particular software application with which a particular search query is associated. Generally, the services of the transaction assistance framework 130 can be accessed through graphical user interfaces of client computing devices 102, 104. In some instances, portions of the transaction assistance framework 130 can be implemented locally on a client computer.

Computing devices implementing the transaction assistance framework 130 can each include one or more processors executing software comprising the transaction assistance framework 130, including single or multiple processors, multiple processors operating in a network or pool of computing devices, and parallel processing and cloud computing environments. Each processor can execute instructions and manipulate data to perform operations and implement the functionality of the transaction assistance framework 130, as well as access, manipulate, and manage data used in and generated by the transaction assistance framework 130. For instance, transaction assistance framework 130 can access and use data objects 131, 132, 133, and including graphical analytics viewers 134, 135, to provide a graphical analytics platform for analyzing the data objects. Data objects 131, 132, 133 can be served, stored, or otherwise maintained locally (e.g., by repository 114) or remotely, for example in repositories (e.g., 113) or application servers (e.g., 106) remote from the transaction assistance framework 130. Similarly, graphical analytics viewers used by the transaction assistance framework 130 can be maintained locally (e.g., at repository 114) or remotely (e.g., at repository 115 or one of application servers 106, 108, 110). Client computing devices 102, 104 can access the transaction assistance framework 130 and consume the interactive graphical analytics functionality of the transaction assistance framework 130. In some instances, all or a portion of the transaction assistance framework 130 can be implemented locally on the client computing device, while in other examples, at least a portion of the transaction assistance framework 130 is served by remote computing devices, such as a service offered through an enterprise software environment.

A corpus of data objects 131, 132, 133 can be maintained across a plurality of computing devices (e.g., 106, 113, 114). Data objects 131, 132, 133 are data entities including one or more defined or inherited attributes and values that can be operated upon by software functions, operations, applications, modules, and other software entities. In some instances, attributes can be implemented as object metadata. Further, each object attribute can have associated data defining the values of the corresponding object attribute. As but one example, an object intended for business use can define a customer identity and include attributes such as customer ID, customer name, address, etc. with respective attribute values, or data, of ID = X123, name = James Bond, address = 13 West Cliff Boulevard, etc. Indeed, in some instances, one or more data objects 131, 132, 133 can be implemented as business objects.

A "business object" as understood herein may encompass an encapsulation of data and modelled business processes in the form of an object applicable by an object-oriented program code as a whole, with the business object hiding the structure and implementation details of the data within the business object. In other words, a business object is a combination of data and procedures with interfaces operable by another program code.

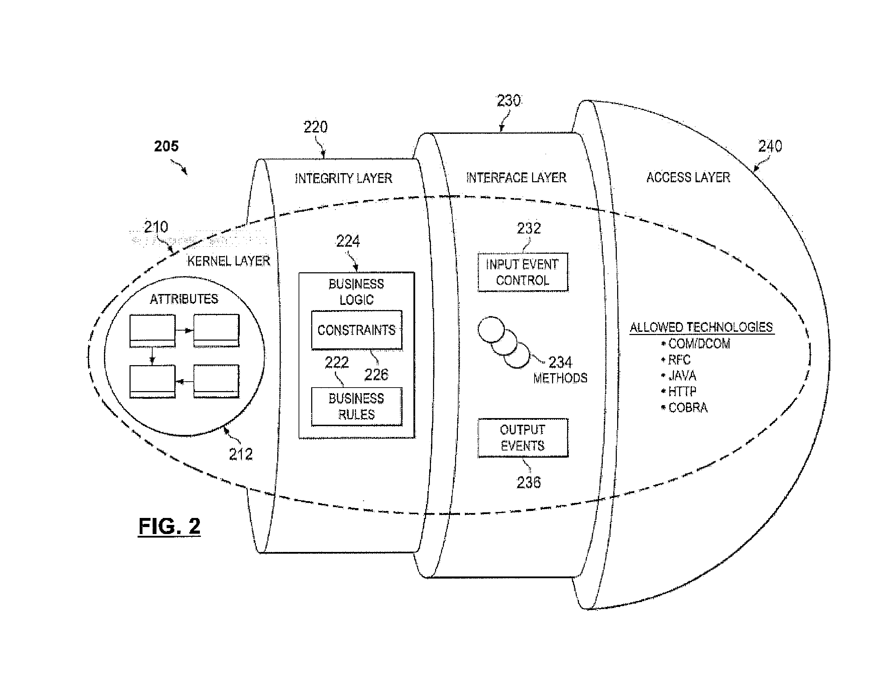

FIG. 2 illustrates the structure of a generic business object 205 in environment 100. In general, the overall structure of the business object model can ensure the consistency of the interfaces that are derived from the business object model. The derivation helps ensure that the same business-related subject matter or concept can be represented and structured in the same way in various interfaces. The business object model can define the business-related concepts at a central location for a number of business transactions. In other words, it reflects the decisions made about modeling the business entities of the real world acting in business transactions across industries and business areas. The business object model can be defined by the business objects and their relationship to each other (the overall net structure).

Each business object is thus a capsule with an internal hierarchical structure, behavior offered by its operations, and integrity constraints. Business objects are generally semantically disjointed, *i*.*e*., the same business information is represented once. In some embodiments, the business objects are arranged in an ordering framework such that they can be arranged according to their existence dependency to each other. For example, in a modeling environment, the customizing elements might be arranged on the left side of the business object model, the strategic elements might be arranged in the center of the business object model, and the operative elements might be arranged on the right side of the business object model. Similarly, the business objects can be arranged in this model from the top to the bottom based on defined order of the business areas, e.g., finance could be arranged at the top of the business object model with customer relationship management (CRM) below finance and supplier relationship management (SRM) below CRM. To help ensure the consistency of interfaces, the business object model may be built using standardized data types as well as packages to group related elements together, and package templates and entity templates to specify the arrangement of packages and entities within the structure. In some instances, a plurality of packaged or grouped business objects can be visualized by the visualizer system 108 as a group, to discover business objects, within the grouping, that satisfy or best correspond to certain criteria.

A business object may be defined such that it contains multiple layers, such as in the example business object 205 of FIG. 2. The example business object 205 contains four layers: the kernel layer 210, the integrity layer 220, the interface layer 230, and the access layer 240. The innermost layer of the example business object is the kernel layer 210. The kernel layer 210 represents the business object's 205 inherent data, containing various attributes 212 of the defined business object. Attributes of a business object can be used to map the business object to certain criteria for use in visualizing the business object. Indeed, in some examples, the transaction assistance framework 130 can identify common attributes among a set of business objects to identify in connection with the identification of analytics viewers with analytics schemes capable of developing an analytics presentation related to the common attributes.

The second layer represents the integrity layer 220. In the example business object 205, the integrity layer 220 contains the business logic 224 of the object. Such logic may include business rules 222 for consistent embedding in the environment 100 and the constraints 226 regarding the values and domains that apply to the business object 205. Business logic 224 may comprise statements that define or constrain some aspect of the business, such that they are intended to assert business structure or to control or influence the behavior of the business entity. It may pertain to the facts recorded on data and constraints on changes to that data. In effect, business logic 224 may determine what data may, or may not, be recorded in business object 205. The third layer, the interface layer 230, may supply the valid options for accessing the business object 205 and describe the implementation, structure, and interface of the business object to the outside world. To do so, the interface layer 230 may contain methods 234, input event controls 232, and output events 236. The fourth and outermost layer of the business object 205 in FIG. 2 is the access layer 240. The access layer 240 defines the technologies that may be used for external access to the business object's 205 data. Some examples of allowed technologies may include C++, SAP NetWeaver, COM/DCOM (Component Object Model/Distributed Component Object Model), CORBA (Common Object Request Broker Architecture), RFC (Remote Function Call), Hypertext Transfer Protocol (HTTP) and Java, among others. Additionally, business objects 205 of this embodiment may implement standard object-oriented technologies such as encapsulation, inheritance, and/or polymorphism.

Returning to the example system illustrated in FIG. 1, application servers 108, 108, 110 (and, in some instances, transaction assistance framework 130 and/or search engine 140) can each include at least one interface (142, 143, 144), one or more processors (147, 148, 149), and computer-readable memory (152, 153, 154). In some instances, some combination of application servers 106, 108, 110 (and, in some instances, transaction assistance framework 130, and repositories 113, 114, 115 can be hosted on a common computing system, server, or server pool, and share computing resources, including shared memory, processors, and interfaces. The interfaces 142, 143, 144 can be used for communicating with other systems in a client-server or other distributed environment (including within environment 100) connected to the network 120, for example the one or more clients 102, 104, external data sources (e.g., 115), or any other computing device adapted to interface with the servers 106, 108, 110, including devices not illustrated in FIG. 1. Generally, each interface 142, 143, 144 comprises logic encoded in software and/or hardware in a suitable combination and operable to communicate with the network 120. More specifically, the interfaces 142, 143, 144 may comprise software supporting one or more communication protocols associated with communications such that the network 120 or hardware is operable to communicate physical signals within and outside of the illustrated software environment 100.

Each processor 147, 148, 149 can execute instructions and manipulate data to perform the operations of an associated server or system (e.g., 106, 108, 110, 130, 140) and may comprise, for example, a central processing unit (CPU), a blade, an application specific integrated circuit (ASIC), or a field-programmable gate array (FPGA), among other suitable options. Although each processor 147, 148, 149 is illustrated as a single processor, multiple processors may be used according to the particular needs of the associated server. References to a single processor 147, 148, 149 are meant to include multiple processors where applicable. The operations that each processor 147, 148, 149 executes are determined by the purpose and operations of its associated server. Generally, the processor 147, 148, 149 executes instructions and manipulates data to perform the operations of its respective server and, specifically, the software systems, services, and applications hosted by the servers 106, 108, 110.

At a high level, each "server" (e.g., 106, 108, 110) includes one or more electronic computing devices operable to receive, transmit, process, store, or manage data and information associated with the environment 100. Specifically, a server is responsible for receiving requests from one or more clients and sending the appropriate response to the requesting clients. In addition to requests from external clients, requests may also be sent from internal users, external or third-party customers, other automated applications, as well as any other appropriate entities, individuals, systems, or computers. For example, although FIG. 1 illustrates each server as a single server, a server can be implemented using two or more servers, as well as computers other than servers, including a server pool. Indeed, a server may be any computer or processing device such as, for example, a blade server, general-purpose personal computer (PC), Macintosh, workstation, UNIX-based workstation, or any other suitable device. In other words, the present disclosure contemplates computers other than general purpose computers, as well as computers without conventional operating systems. Further, servers may be adapted to execute any operating system, including Linux, UNIX, Windows, Mac OS, or any other suitable operating system.

In the case of servers hosting, serving, or otherwise providing software services or products, a processor (e.g., 147, 148, 149) can execute the functionality required to receive and respond to requests from clients, as well as client applications interfacing with the server's hosted application (e.g., 116, 117, 118, 130, 140). It will be understood that the term "application server" (e.g., 106, 108, 110) can include any suitable software component or module, or computing device(s) capable of hosting and/or serving a software application, including distributed, enterprise, or cloud-based software applications. Regardless of the particular implementation, "software" may include computer-readable instructions, firmware, wired or programmed hardware, or any combination thereof on a tangible medium operable when executed to perform at least the processes and operations described herein. Indeed, each software component may be fully or partially written or described in any appropriate computer language including C, C++, Java, Visual Basic, assembler, Perl, any suitable version of 4GL, as well as others. Applications can be implemented as individual modules that implement the various features and functionality through various objects, methods, or other processes, or may instead include a number of sub-modules, third party services, components, libraries, and such, as appropriate. Conversely, the features and functionality of various components can be combined into single components as appropriate.

At a high level, each of the one or more hosted applications and services (e.g., 116, 117, 118) illustrated in the environment 100 can include any application, program, module, process, or other software that may execute, change, delete, generate, or otherwise manage information according to the present disclosure, particularly in response to and in connection with one or more requests received from the illustrated clients 102, 104, as well as other applications. In certain cases, only one hosted application may be located at a particular server. In others, a plurality of related and/or unrelated hosted applications may be stored at a single server, or located across a plurality of other servers, as well. In certain cases, environment 100 may implement a composite hosted application. For example, portions of the composite application may be implemented as Enterprise Java Beans (EJBs) or design-time components may have the ability to generate run-time implementations into different platforms, such as J2EE (Java 2 Platform, Enterprise Edition), ABAP (Advanced Business Application Programming) objects, or Microsoft's NET, among others. Additionally, applications may represent web-based applications accessed and executed via the network 120 (e.g., through the Internet). Further, one or more processes associated with a particular hosted application or service may be stored, referenced, or executed remotely. For example, a portion of a particular hosted application or service may be a web service associated with the application that is remotely called, while another portion of the hosted application may be an interface object or agent bundled for processing at a remote client (e.g., 102, 104). Moreover, any or all of the hosted applications and software service may be a child or submodule of another software module or enterprise application (not illustrated) without departing from the scope of this disclosure. Still further, portions of a hosted application can be executed by a user working directly at a server hosting the application, as well as remotely at a client.

Each of the example servers 106, 108, 110 can also include a memory (152, 153, 154 respectively). Further repositories 113, 114, 115 and computing devices (e.g., 102, 104, 106, 108, 110) can also each include at least one memory device. Each memory may include any memory or database module and may take the form of volatile or non-volatile memory including, without limitation, non-transitory memory elements, magnetic media, optical media, random access memory (RAM), read-only memory (ROM), removable media, or any other suitable local or remote memory component. Each memory may store various objects or data, including classes, frameworks, applications, backup data, business objects, jobs, web pages, web page templates, database tables, content repositories storing business or other dynamic information, or other information including any parameters, variables, algorithms, instructions, rules, constraints, or references thereto relevant to the purposes of the particular server. Each memory may also include any other appropriate data, such as VPN applications, firmware logs and policies, firewall policies, a security or access log, print or other reporting files, as well as others. Again, the particular data and instructions stored in each memory (e.g., 131, 132, 133, 134, 135) will be described in detail below in connection with the illustrated implementations of the software environment 100 and components thereof.

Generally, the network 120 facilitates wireless or wireline communications between the components of the software environment 100 (e.g., between the application servers 106, 108, 110, transaction assistance framework 130, search engine 140, data repositories 113, 114, 115, and one or more clients (e.g., 102, 104), as well as between other components as appropriate), as well as with any other local or remote computer, such as those associated with one or more applications or external data sources. The network 120 can be implemented as one or more distinct networks. In any implementation, the network 120 may be a continuous or discontinuous network without departing from the scope of this disclosure, so long as at least a portion of the network 120 may facilitate communications between senders and recipients. The network 120 may be all or a portion of an enterprise or secured network. As an example, in FIG. 1 networks 120 may represent a portion of an enterprise network, or a connection to the Internet. In some instances, a portion of the network 120 may be a virtual private network (VPN). All or a portion of the network 120 can comprise either a wireline or wireless link. Example wireless links may include 802.11a/b/g/n, 802.20, WiMax, and/or any other appropriate wireless link. In other words, the network 120 encompasses any internal or external network, networks, sub-network, or combination thereof operable to facilitate communications between various computing components inside and outside the illustrated environment 100. The network 120 may communicate, for example, Internet Protocol (IP) packets, Frame Relay frames, Asynchronous Transfer Mode (ATM) cells, voice, video, data, and other suitable information between network addresses. The network 120 may also include one or more local area networks (LANs), radio access networks (RANs), metropolitan area networks (MANs), wide area networks (WANs), all or a portion of the Internet, and/or any other communication system or systems at one or more locations.

The illustrated implementation of FIG. 1 includes one or more local and/or remote clients 102, 104. A client 102, 104 can be any computing device operable to connect or communicate at least with the application server 104 and/or the network 120 using a wireline or wireless connection. Each client 102, 104 includes at least one GUI (e.g., 160, 165). In general, the client 102, 104 comprises an electronic computing device operable to receive, transmit, process, and store any appropriate data associated with the software environment of FIG. 1. It will be understood that there may be any number of clients 102, 104 associated with environment 100, as well as any number of clients 102, 104 external to environment 100. Further, the term "client" and "user" may be used interchangeably as appropriate without departing from the scope of this disclosure. Moreover, while each client 102, 104 is described in terms of being used by one user, this disclosure contemplates that many users may use one computer or that one user may use multiple computers. As used in this disclosure, the client 102, 104 is intended to encompass a personal computer, electronic notepad, touch screen terminal, workstation, network computer, kiosk, wireless data port, smart phone, personal data assistant (PDA), one or more processors within these or other devices, or any other suitable processing device. For example, the client 102, 104 may comprise a computer that includes an input device, such as a keypad, touch screen, mouse, or other device that can accept information, and an output device that conveys information associated with operations of one or more applications stored and/or executed on an application server (or other servers in environment 100) or on the client 102, 104 itself, including digital data, visual information, or GUI 160, 161. Both the input device and the output device may include fixed or removable storage media such as a magnetic computer disk, CD-ROM, or other suitable media to both receive input from and provide output to users of the clients 102, 104 through the display, namely the GUI 160, 161.

The GUI 160, 161 comprises a graphical user interface operable to allow the user to interface with at least a portion of environment 100 for any suitable purpose, including allowing a user to interact with one or more software applications including transaction assistance framework 130 and applications and services (e.g., 116, 117, 118) served by application servers 106, 108, 110. Generally, the GUI 160, 161 provides users with an efficient and user-friendly presentation of data provided by or communicated within the system, such as an interactive analytics presentation provided through transaction assistance framework 130. The term "graphical user interface," or GUI, may be used in the singular or in the plural to describe one or more graphical user interfaces and each of the displays of a particular graphical user interface. Therefore, the GUI 160, 161 can be any graphical user interface, such as a web browser, touch screen, or command line interface (CLI) that processes information in the environment 100 and efficiently presents the results to the user. In general, the GUI 160, 161 may include a plurality of user interface (UI) elements such as interactive fields, pull-down lists, media players, tables, graphics, virtual machine interfaces, buttons, etc. operable by the user at the client 108. These UI elements may be related to the functions of one or more applications or services (e.g., 116, 117, 118, 130), including applications hosted locally at the client.

While FIG. 1 is described as containing or being associated with a plurality of elements, not all elements illustrated within environment 100 of FIG. 1 may be utilized in each alternative implementation of the present disclosure. Additionally, one or more of the elements described herein may be located external to environment 100, while in other instances, certain elements may be included within or as a portion of one or more of the other described elements, as well as other elements not described in the illustrated implementation. For instance, transaction assistance framework 130 can be integrated with one or more of an enterprise software system, applications 115, 116, 117, 118, search engine 140, and other software and systems. Further, certain elements illustrated in FIG. 1 may be combined with other components, as well as used for alternative or additional purposes in addition to those purposes described herein.

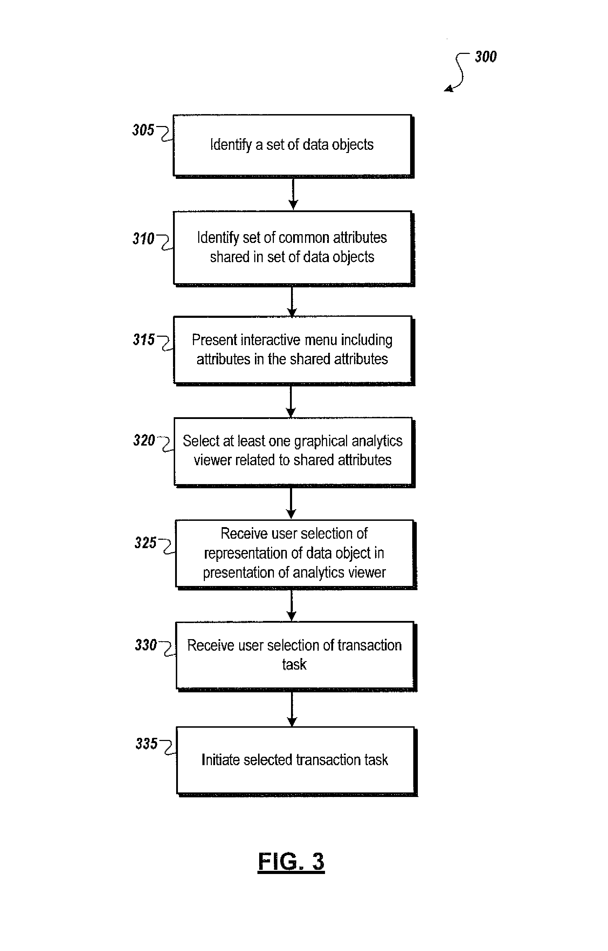

Turning now to the flowchart 300 of FIG. 3, an example technique is shown for launching a transactional task from an analytics viewer. A set of data objects can be identified 305 in a corpus of data objects in connection with the use of a particular software application or service adapted to perform a set of transactions on data objects in the set. In some examples, the set of data objects can be identified as satisfying a particular user search query entered in connection with the particular software application. For instance, a search tool or field can be offered in connection with the application (e.g., through a search tool integrated or accessible through the application's user interface), the search tool configured to accept natural language queries relating to actions or tasks performed or assisted by the application. For example, the search query can be entered by a business user of an enterprise application software service directed toward making a decision relating to a task to be performed using the service. A plurality of common attributes shared by two or more data objects in the set of data objects can be identified 310. For example, various types or classes of data objects can be identified 305 satisfying a user request, each type or class having particular types of attributes, fields, or data, including inherited and custom-defined attributes. Accordingly, where multiple data objects in the set share attributes, these attributes can be identified 310 and presented 315 in an interactive menu, the menu listing at least a portion of the identified common attributes pertaining to the identified set of data objects.

Users can interact with the presented interactive menu presented 315 to the user on a user interface of a computer. Additionally, one or more graphical analytics tools can be presented representing aspects of the data objects in the identified set. For instance, a set of graphical analytics viewers can be dynamically identified 320 from a plurality of graphical analytics viewers available for use with, for example, a transaction assistance framework. The set of graphical analytics viewers can be identified 320 as possessing functionality potentially capable of generating analytics presentations based on the set of identified data objects, for instance, based on one or more of the identified common attributes of the data objects. Each graphical analytics viewer in the plurality of graphical analytics viewers can be adapted with analytics functionality allowing the graphical analytics viewer to generate or render an analytics presentation charting, mapping, organizing, graphing, sorting, associating, synthesizing, or otherwise representing aspects of data objects in the set of data objects according to the particular scheme of the graphical analytics viewer. Among the aspects represented in presentations of the graphical analytics viewers, aspects and values of the attributes of the individual data objects can be charted and represented. Accordingly, each graphical analytics viewer can present a representation of data objects according to the graphical analytic viewer's respective analytics scheme.

Dynamically selecting or identifying 320 the set of graphical analytics viewers based on the identified common attributes can include predicting that certain analytics schemes of viewers in a plurality of graphical analytics viewers would be appropriate for or particularly relevant to the identified attribute. Dynamically identifying a set of graphical viewers that could be potentially useful in providing an analytics presentation relating to the identified set of data objects can include parsing the common attributes of the data objects to identify particular characteristics, fields, or values of the attributes and identifying aspects of certain graphical analytics viewers that correspond, or likely correspond, to the characteristics of the common attributes. As but one example, a common data object attributes can be identified relating to geographical information (e.g., data identifying a city name, state, country, postal code, area code, etc.) objects by parsing fields or values of the data objects. In this example, graphical analytics viewers can be identified that render presentations representing data objects according to analytics schemes directed to generating representations of geographic data. In one such example, a geography-related graphical analytics viewers can be identified that can map data objects and data object attributes to a geographical map, such as a world map or street map. In addition to the geography-related graphical analytics viewers of this example, a wide variety of other graphical analytics viewers can be provided each with a analytics scheme that may be more or less adapted for modeling and representing certain data object attributes, whether related to person names, currency values, product information, organization information, invoice data, lifecycle data, supply chain data, accounting data, geographical information, biographical information, or other attributes and data.

Where more than one graphical analytics viewers has been identified 320 as potentially useful in representing data objects in the identified 305 set of data objects, the set of identified viewers can be analyzed to determine or predict which of the viewers are the most relevant or can provide an analytics presentation predicted to be of particular use to a user. The graphical analytics viewers determined to be the most relevant or useful can be provided and presented on a user interface of a computing device. In instances where a small number of analytics viewers are identified as relevant to or well-adapted to render presentations of a particular identified set of data objects, all of the identified analytics viewers can be presented to the user. In some instances, analytics viewers can be presented in connection with the presented interactive menu of data object attributes. Indeed, in some examples, user interactions with the menu of attributes can influence presentations of the selected analytics viewers. For example, a user selection of one or more attributes from the menu can filter the set of identified data objects. Filtering the set of identified data objects can be automatically reflected in the representation of the data object set by the analytics viewers presented with the interactive menu. Further, selection of a particular attribute from the menu can reflect a user's interest in that particular attribute, causing a different analytics viewer to be presented that is identified as particularly well-adapted or relevant to the user-selected attribute. The new analytics viewer can supplement or replace one or more analytics viewers presented prior to a user's selection of the attribute from the menu.

Analytics viewer presentations can include graphical representations of one or more data objects in the set (or filtered set). Each graphical representation can be selectable by a user. Accordingly, a user selection can be received 325 identifying a particular representation of a particular data object included in the analytics viewer presentation. Additionally, a user request can be received 330, following or upon selection of the representation of the particular data object, to launch the performance of a transaction task on the selected particular data object. The user request to perform the transaction can be received through an interface listing the available transaction tasks that can be performed on the selected data object. The listing of available transactions can be dynamically generated to identify those transactions that are performable by the software application from which the analytics session was launched, the transactions that can be performed on the particular type of data object selected, and/or the context of the analytics session (e.g., based on the user profile, role, or authority, client device type, network connection type, security profile, customer account terms, etc.). Selection 330 of the transaction task to be performed on or initiated using the selected 325 data object can then be initiated 335 or launched directly from the analytics presentation.

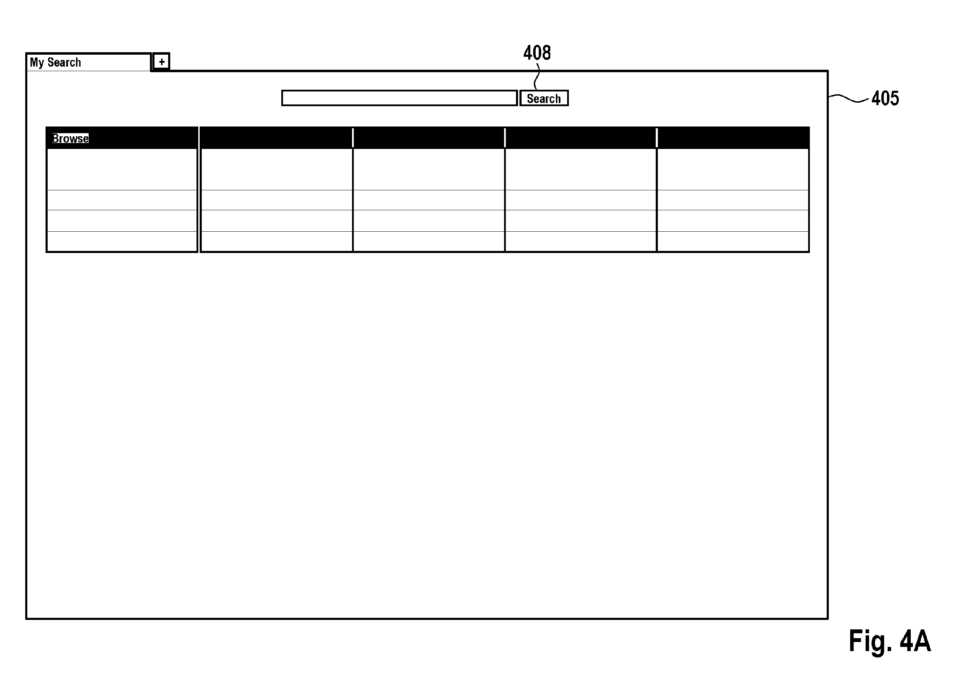

FIGS. 4A-4H are example screenshots of a user interface of a transaction assistance framework including one or more analytics viewers illustrating a first example coupling analytics with transaction launching involving a set of data objects. In FIG. 4A, a user interface 405 that can be launched for example through a particular software application or service. In the example of FIGS. 4A-4H, the user has opened or launched the transaction assistance framework via a module of an enterprise software system, particularly a supply chain management (SCM) module. In some examples, the transaction assistance framework can be reusable and launched from a plurality of different applications. For instance, in this example, the transaction assistance module can be launched from any one of a suite of different enterprise software modules including the SCM module, such as an enterprise resource planning (ERP) module, customer relationship management (CRM) module, product lifecycle management (PLM) module, supplier relationship management (SRM) module, among others. Operation of the transaction assistance framework can depend on the particular software application, service, or module (or source) from which the framework is launched. For example, the user interface can include a search field 408 that can accept a user search query. The search query can be entered in the form of a natural language search, or question. Parsing the search query to identify a set of data objects satisfying the query can be based, at least in part, on the source of the transaction assistance framework's launch. Basing the search on the source of the search can provide context for the search to assist in both understanding the nature of the query as well as selecting data objects that are more relevant to the source application, particularly in environments where multiple software applications or services share data objects searched using the transaction assistance framework.

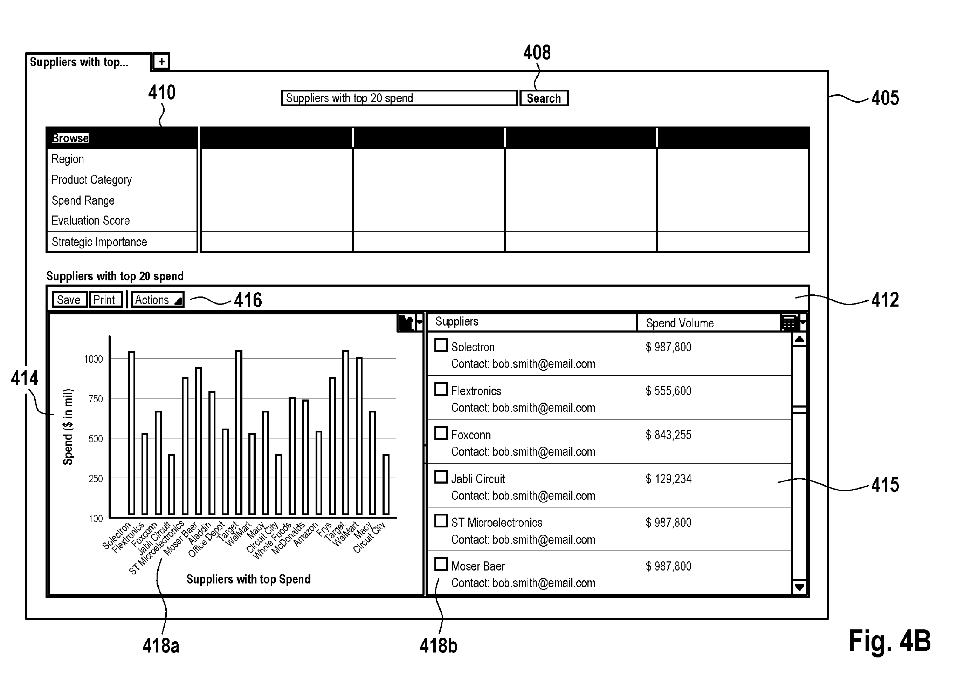

FIG. 4B shows a user interface of the transaction assistance framework rendered in response to identifying a set of data objects responsive to a user search query entered in search field 408. In this example, a user has entered the query "Suppliers with top 20 spend" in an attempt to identify the top twenty suppliers of the user's organization. In response to the search, a set of data objects has been identified that are related to the SCM module and responsive to the query. Additionally, the search query was parsed to recognize that the user likely preferred only a set of twenty search results. Further, a set of attributes can be identified from this set of data objects and presented in interactive menu 410. Additionally, one or more analytics viewers 414, 415 can be identified and selected and served or otherwise provided for presentation in user interface 405 within analytics window 412. The first analytics viewer 414 is a column graph analytics viewer adapted to compare a supplier against total spending in U.S. dollars. The second analytics presentation 415 is a table listing the top twenty suppliers by spending, and providing data including the previous year's spending totals and the supplier contact for the organization of the user. Data from the identified objects can be identified and used as the basis of the column graph presented in analytics viewers 414, 415. Additionally, as the query is directed to spending, attributes and data relating to spending have been identified and used, in a predictive manner, by the analytics viewers 414, 415 in the generation of presentation predicted to be acceptable and useful to the user.

As illustrated in each of analytics viewers 414, 415, an analytics viewer presentation can include references to one or more data objects through graphical representations (e.g., 418a, 418b) of the data objects in the analytics presentations. For example, a representation 418a, 418b of a data object embodying information describing supplier "Moser Baer" is included in each of analytics viewers 414, 415, respectively. Each graphical representation of a data object can be selected by a user directly through the analytics viewer presentations. Further, transaction tasks can be selected and initiated for one or more selected data objects, for example, using "Actions" button 416, which can, when selected, present a listing of transaction tasks identified as capable of being initiated using the selected data object by the SCM module.

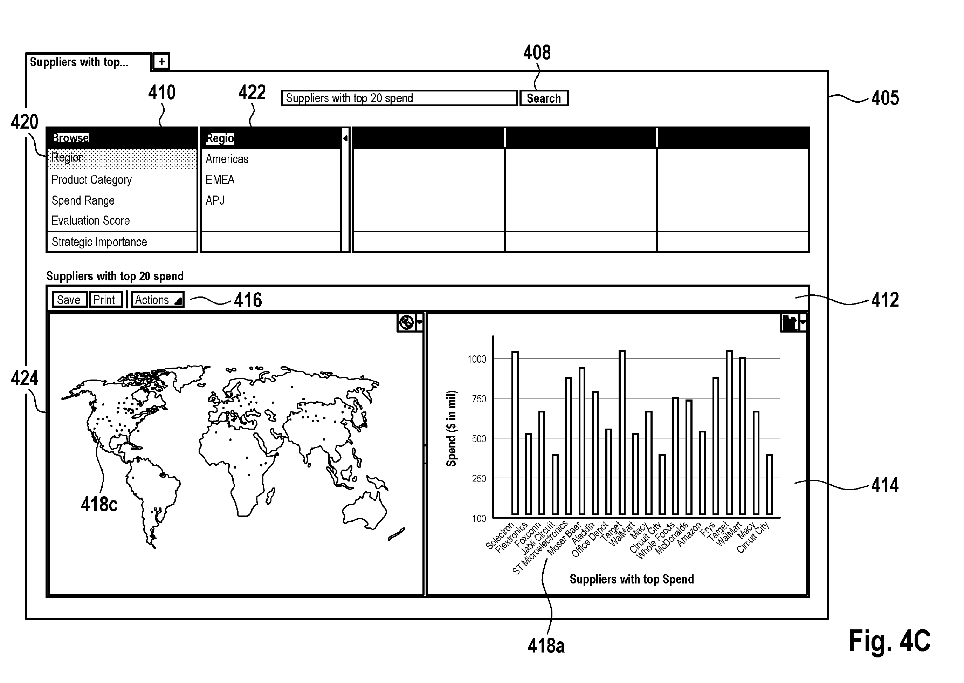

In addition to being able to select graphical representations (e.g., 418a, 418b) of data objects presented using dynamically selected analytics viewers, a user can also interact with menu 410 to refine the set of data objects or explore other analytics scenarios using various graphical analytics viewers presented in window 412. For example, as shown in the example screenshot of FIG. 4C, the user interface 405 has responded to a user's selection of one of the attributes presented in the menu 410. In this example, a user has selected menu item "Region," corresponding to an attribute common to the data objects and relating to a geographic region of organizations represented by at least some of the data objects. Additionally, in some instances, attributes can include sub-attributes, such as sub-attributes maintained in a hierarchy. For instance, as in the present example, the region attribute can be a parent attribute of attributes relating to country, state/province, city, etc. In the example of FIG. 4C, selection of the "Region" menu item 420 results in a sub-menu 422 being presented allowing a user to select one or more identified values (e.g., "Americas," "EMEA," or "APJ") for the region attribute included in data objects in the identified set of objects. Moreover, the user's interaction with the "Region" menu item 420 can be interpreted by the transaction assistance framework as an indication that the user is particularly interested in geographical attributes. As a result, the transaction assistance framework can identify graphical analytics viewers related to geographical data and present such an analytics viewer 424 in window 412. Indeed, in this example, the transaction assistance framework has replaced a previously-presented analytics viewer 415 with a map analytics viewer 424 identified as potentially more relevant to the instant user's analysis session. As with the other analytics viewers (e.g., 414, 415) the map analytics viewer can include graphical representations (e.g., 418c) selectable by a user in connection with the initiation of a transaction task by a software application.

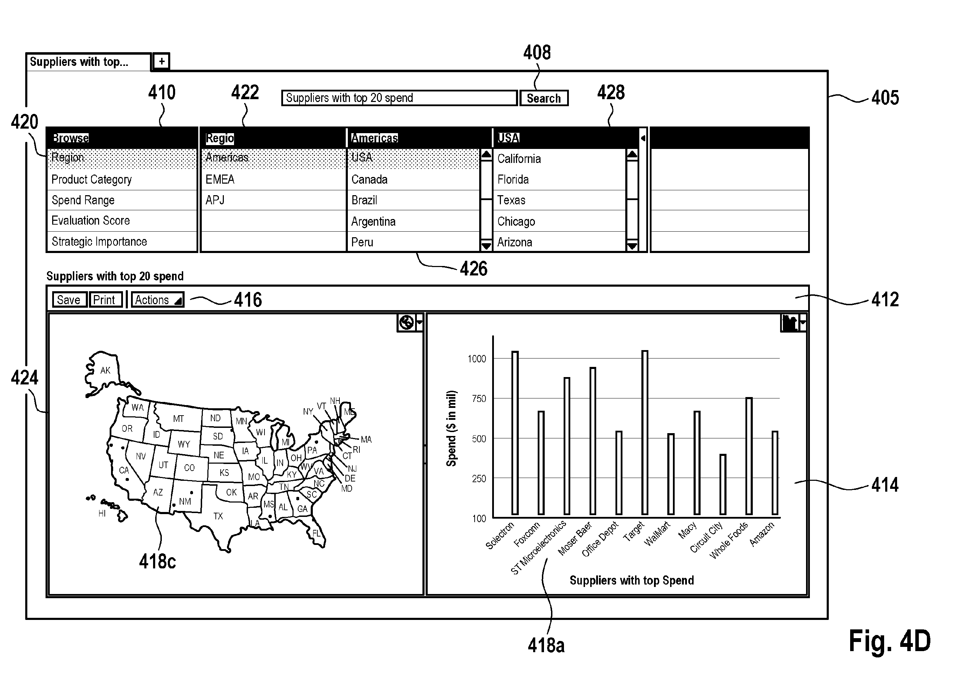

Further, as shown in FIG. 4D, selection of a particular value (e.g., "Americas") of an attribute (e.g., region) using interactive menu 410 can open additional submenus, for instance, selection of a region attribute value in submenu 422 can open a country submenu 426, and selection of a value in submenu 426 can open an additional submenu 428, and so on, until the bottom sub-attribute in the hierarchy is reached. Further, selection of a value for an attribute of a menu or submenu can filter the set of data objects considered by analytics viewers 414, 424 in their rendering of analytics presentations. For instance, in the example of FIG. 4D, selection of the "USA" country attribute value has caused the set of twenty data objects to be filtered down to a subset of eleven data objects identified as having attribute values corresponding to the "USA" country attribute value. Correspondingly, the presentations of analytics viewers 414, 424 have been automatically updated to reflect the focusing of the set of data objects. For instance, column graph viewer 414 has reduced the number of columns to eleven column. In the map analytics viewer 424, not only have graphical representations of the considered data objects been reduced in accordance with the filtering, but the scope of the presentation has also been dynamically altered to reflect a focus on the United States as a geographical entity, as the analytics scheme of the map analytics viewer corresponds closely with the attribute and attribute values the user has interacted with.

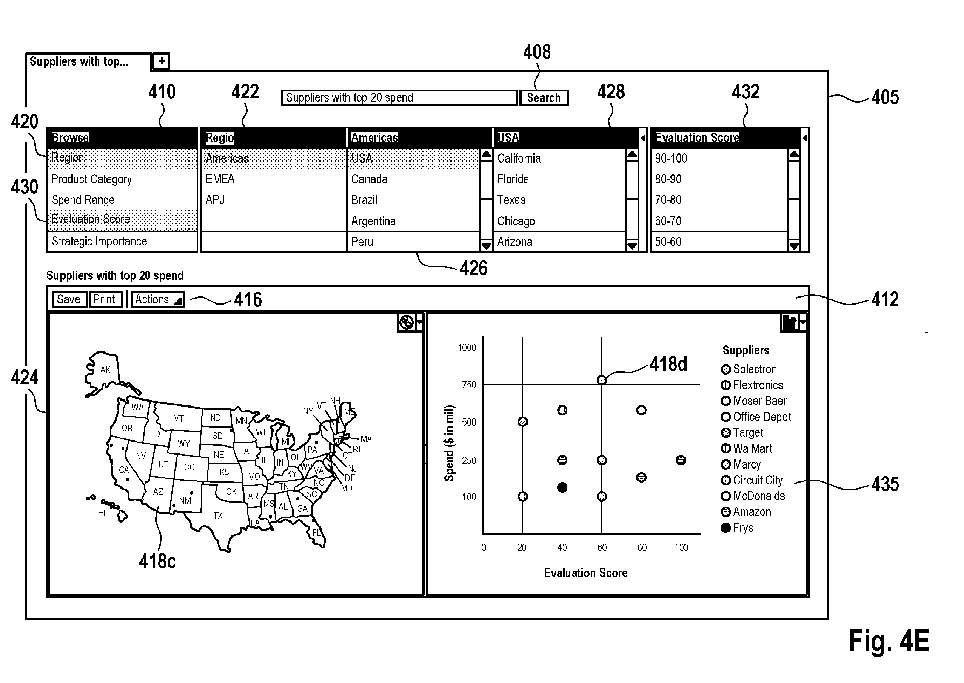

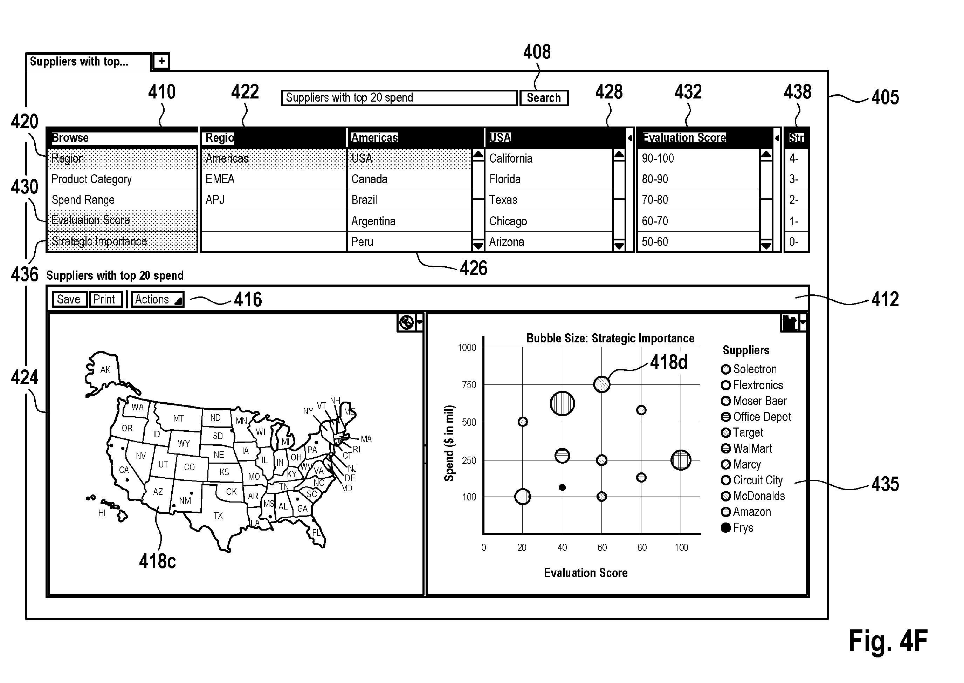

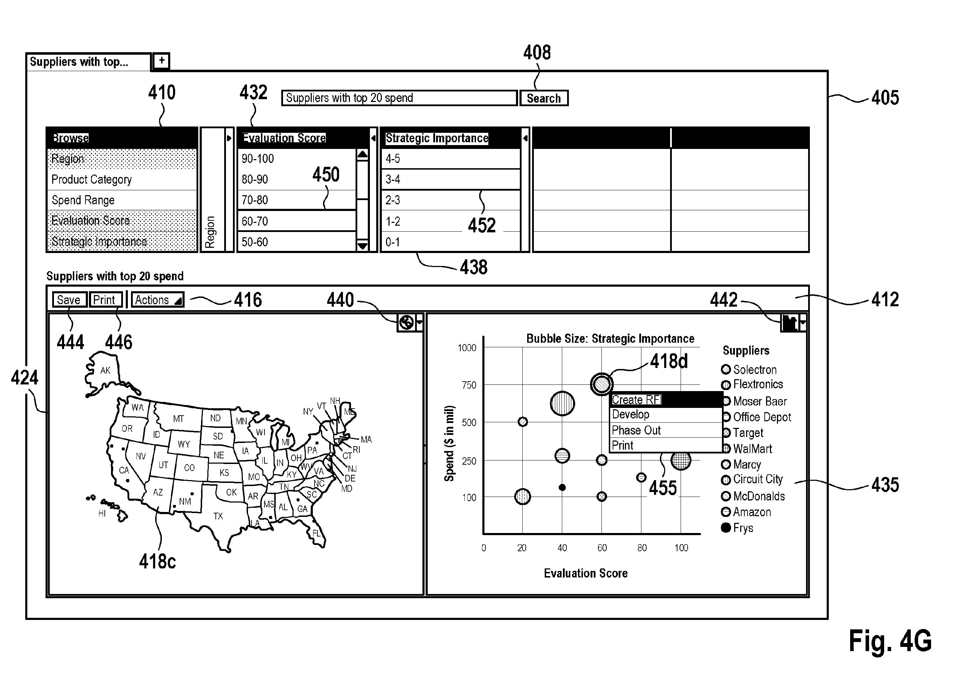

As shown in FIG. 4E, a user can filter the data object set and narrow the focus of co-presented analytics presentations according to multiple different attributes. In the example of FIG. 4E, the user has supplemented the selection of the "USA" country attribute with the selection 430 of attribute "Evaluation Score," resulting in the presentation of submenu 432 and the selection and presentation of substitute bubble graph analytics viewer 435. The newly introduced analytics viewer 435 can also include representations (e.g., 418d) of the immediately considered set or subset of data objects, in this case, the set of eleven data objects limited by the user's prior selection of the "USA" attribute value. "Three dimensional" data presentations can also be realized, allowing for the consideration of more than two attributes and/or attribute values. For instance, as shown in FIG. 4F, the user has selected 436 a third attribute "Strategic Importance," opening submenu 438 (shown partially outside of the immediate field of view of the user interface), and altering bubble graph analytics viewer 435 to add a third dimension to the presentation, with the area of each graphical representation bubble (e.g., 418d) reflecting a value of each data object associated with the strategic importance attribute. Submenus displayed outside of the field can be scrolled or dragged and dropped into view, for example, as shown in FIG. 4G.

Continuing with FIG. 4G, a user can interact with several aspects and controls of the transaction assistance framework and analytics viewer presentations. For example, a user can customize or modify certain characteristics of the viewer presentations themselves, for example, through controls 440, 442. For example, a user can modify settings of the viewer to alter the formatting of the presentation (e.g., add gridlines, change units, size of the presentation, etc.) as well as assign the data that is considered in the presentation. For instance, in the example of FIG. 4G, a user could request to have the y-axis of the bubble map viewer chart strategic importance and have the bubble size reflect spending. Alternatively, a user can specify alternative data included in the data object set different from the data relied upon by the analytics viewer in its initial generation of the analytics presentation. Further, in some examples, a user can manually select which analytics viewers to be presented in window 412, replacing the analytics viewers (e.g., 414, 415, 424, 435) initially selected for presentation by the transaction assistance framework. Additional controls can be provided in connection with the analytics presentations of the graphical analytics viewers. For example, as shown in FIG. 4G, "Save" and "Print" controls 444, 446 can be presented to allow a use to save to memory or print aspects of the analytics presentations, including report-quality prints of the presentations.

As further shown in FIG. 4G, a user can interact with the graphical representations (e.g., 418c, 418d) of the data objects included in the graphical analytics viewers 424, 435. In this example, a user has selected graphical representation 418d corresponding to a data object modeling or maintaining data relating to "Moser Baer." In this example, selection of a particular graphical representation of a data object can trigger the highlighting of fields (e.g., 450, 452) in the interactive menu 410 showing attribute values of the selected data object. Additionally, in some examples, selection of a particular graphical representation of a data object in one analytics viewer presentation can highlight corresponding representation of the data object in other co-presented analytics viewer presentations. Further, selection of a particular graphical representation of a data object can trigger presentation of a listing 455 of transactional tasks identified as being able to be performed on the corresponding data object by the particular application from which the transaction assistance framework was launched (e.g., the SCM module). Generation of the listing 455 can include identifying the set of transaction tasks supported by the particular application or service and determining which transaction tasks can be initiated on the particular, selected data object. Additionally, the permission level, role, authentication, and authorization of the user interacting with the user interface 405 can be identified and considered in generating the listing 455 of available transaction tasks.

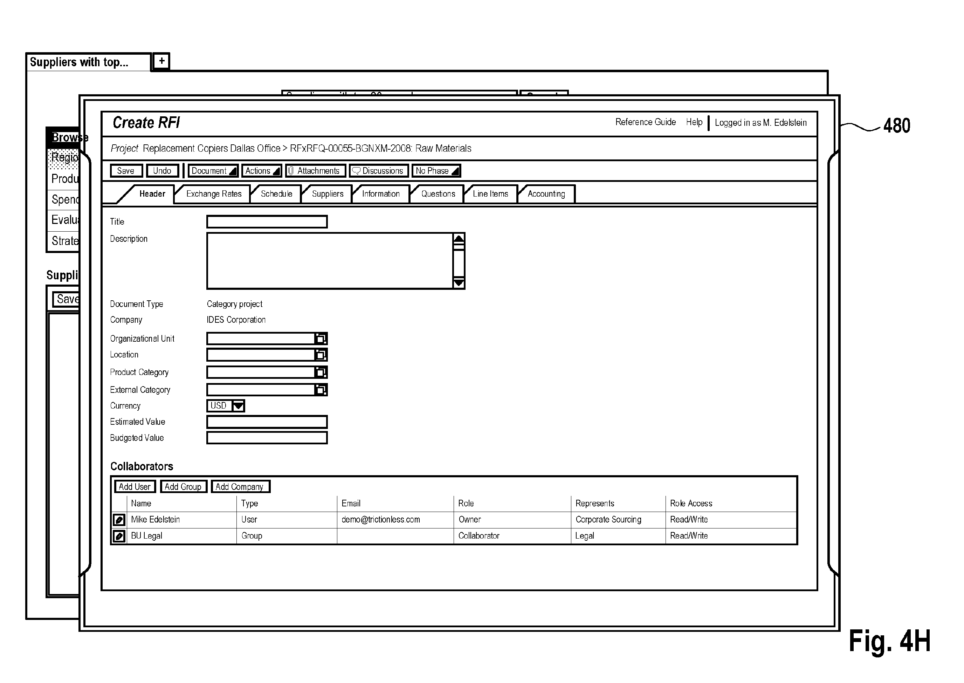

Upon a user's selection of a particular transactional task from listing 455, the transaction assistance framework can cause the transactional task to be initiated at the application responsible for performing the transactional task. In the example of FIGS. 4G-4H, a user has selected the "Create RFI" task from listing 455 to create a request for information (RFI) for the supplier corresponding to the data object selected (e.g., 418d). Accordingly, as shown in FIG. 4H, a window 480 of the SCM module is launched, initiating the RFI creation task performed by the SCM module using the data object corresponding to the selected data object representation 418d.

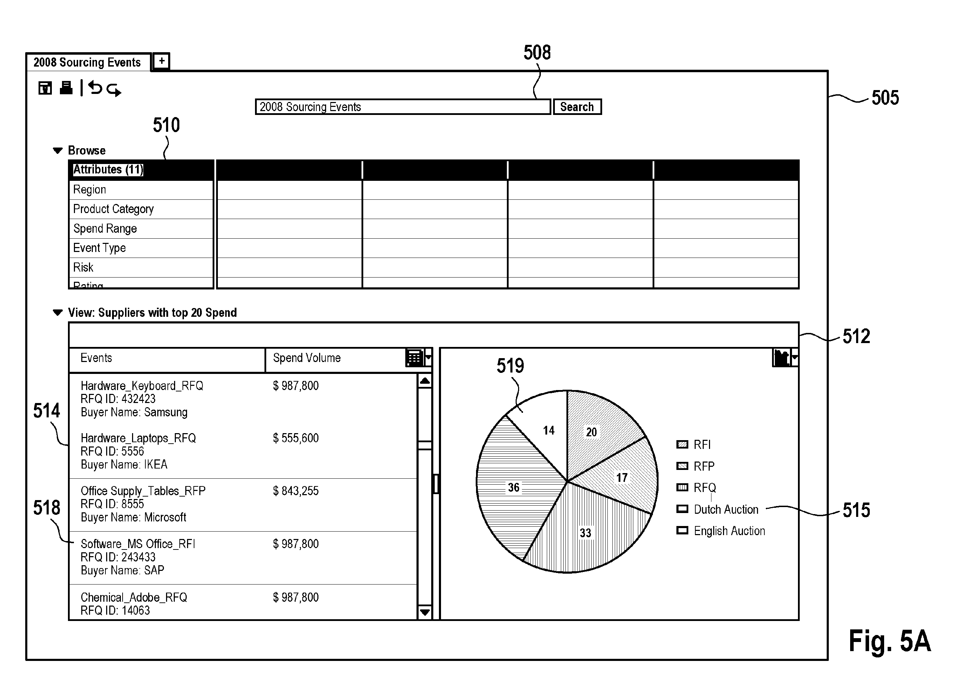

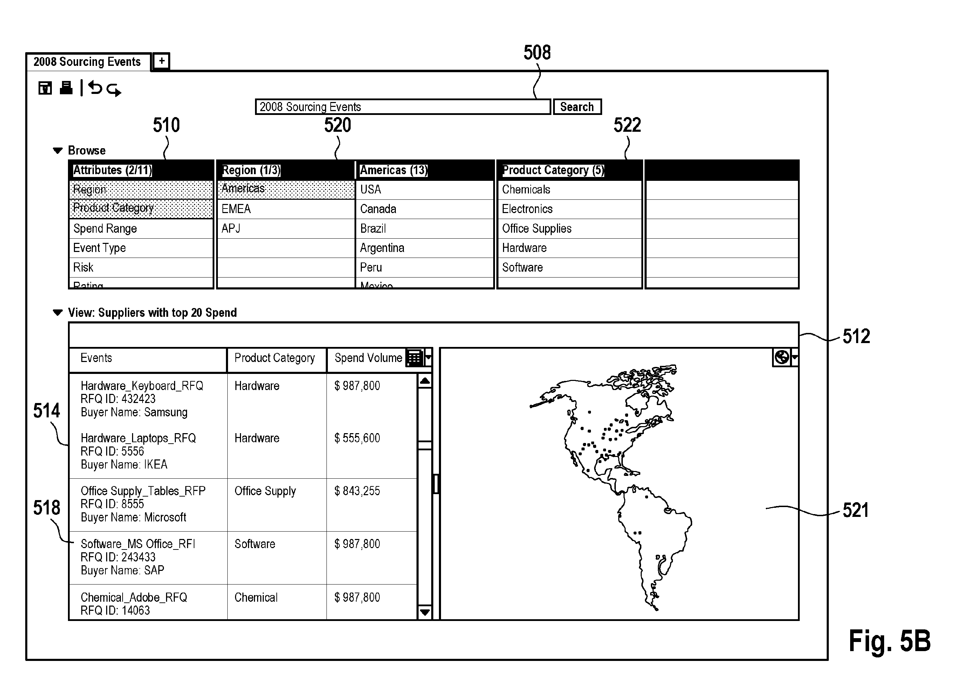

The transaction assistance framework can be reusable and served as a service for use by multiple different applications and software systems, to assist users in analyzing which data should be the subject of a particular task and launching the task directly from the analytics presentation assisting users with their decision. As shown in a second example, illustrated in the screenshots shown in FIGS. 5A-5E, a second application, in this case a supplier relationship management (SRM) module or application, launches the transaction assistance framework. The request to launch the transaction assistance framework can be made from a computing device remote from the computing device or system responsible for launching the example illustrated in FIGS. 4A-4H in connection with a SCM module.

As shown in FIG. 5A, a user has entered a search query in search field 508 of user interface 505 for "2008 Sourcing Events" in connection with the user's attempt to analyze sourcing efficiency in an organization and perform tasks related thereto. A set of data objects have been identified in response to the search query, based at least in part on the search being launched through the SRM module. Additionally, as in the example of FIGS. 4A-4H, a menu 510 has been generated listing identified attributes in the set of data objects, and graphical analytics viewers 514, 515 have been launched rendering analytics presentations that include representations (e.g., 518, 519) of the set of data objects and/or attributes in the set of data objects. As shown in FIG. 5A, identified attributes of the identified set of data objects can be the basis of an analytics presentation, for example, to show groupings of data objects. Accordingly, graphical representations of data objects can be representations of groupings of data objects or a common attribute of a grouping of data objects, as in pie chart analytics viewer 515 including graphical representations (e.g., 519) of groupings data objects by category or attribute (in this case, the type of data object itself, e.g., RFQs (requests for quote), RFIs (requests for information), RFPs (requests for proposals), etc.).

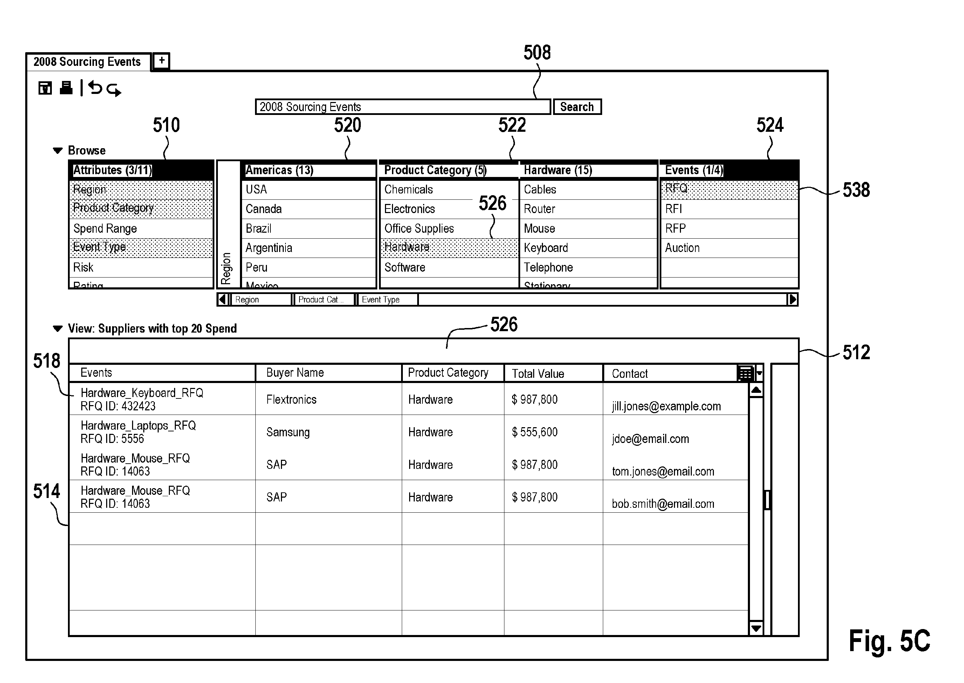

As in the example of FIGS. 4A-4H, a user can interact with the interactive menu 510 of the transaction assistance user interface 505 to filter the set of returned data objects, extend submenus (e.g., 520, 522) in the interactive menu 510, and dynamically change the dynamic viewer presentations presented in connection with the considered set or subset of data objects (e.g., replacing analytics viewer 515 with analytics viewer 521). While in the example shown thus far, multiple analytics viewers are shown, in some instances, the transaction assistance framework can determine that only a single analytics viewer is likely appropriate to provide the most useful analytics presentation to the user. Indeed, as in the example of FIG. 5C, the selection of a particular attribute or attribute value can result in the consolidation or elimination of analytics viewer presentations, for example, to allow for a larger presentation of a particular analytics viewer with a scheme better adapted to provide a presentation accounting for the attributes selected by the user. For example, in FIG. 5C, the user has selected a product category value 526 "Hardware," and, in response, the transaction assistance framework has allowed for the expansion of table-type analytics viewer 514 at the expense of map analytics viewer 521, adding columns to the table presentation including a "Product Category" column.

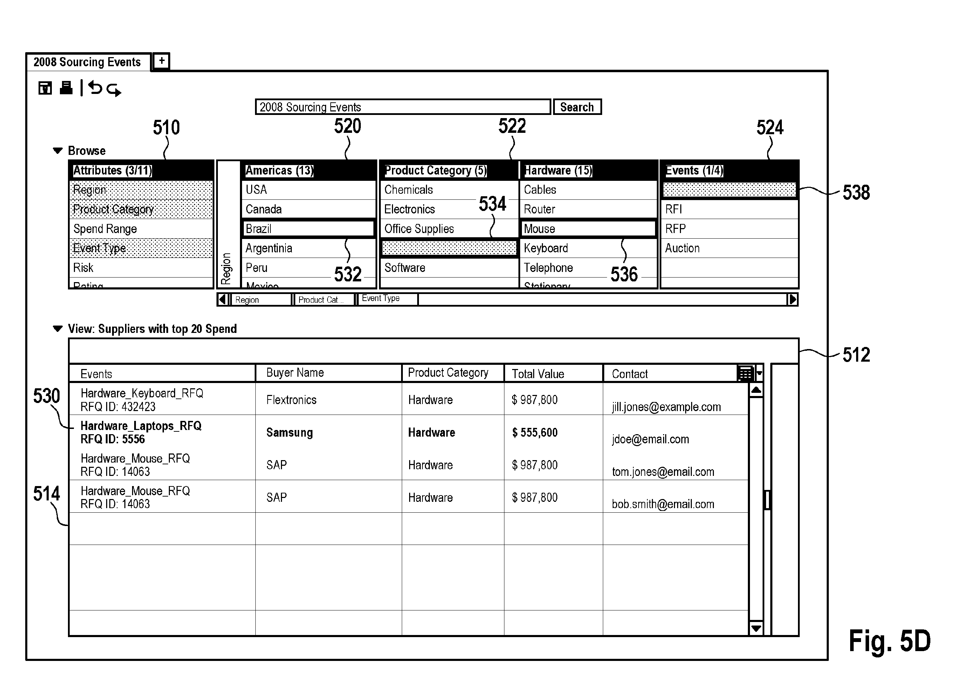

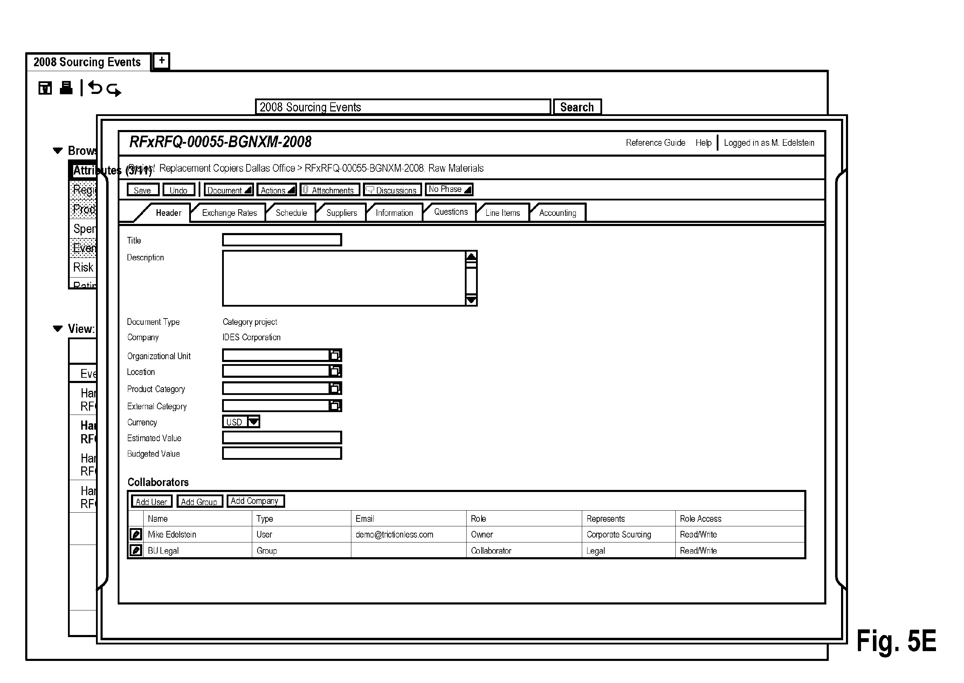

Turning to FIG. 5D, a user has selected one of the graphical representations 530 of a data object. As shown, selection of the graphical representation 530 of the data object has highlighted attribute fields corresponding to the data object. A user can further initiate a particular transactional task on the selected data object, as shown in FIG. 5E. In some instances, a user can select multiple graphical representations corresponding to multiple data objects and launch a transactional task on the batch of selected data objects. A transactional task can be launched as a single task on the batch of data objects or as transactional tasks to be initiated on each of the data objects in the batch in parallel. Other examples, beyond those illustrated and described above can be realized using a flexible, reusable transaction assistance framework, including various user interface layouts, control functions, analytics viewer types, and other features and functionality.

Although this disclosure has been described in terms of certain implementations and generally associated methods, alterations and permutations of these implementations and methods will be apparent to those skilled in the art. For example, the actions described herein can be performed in a different order than as described and still achieve the desirable results. As one example, the processes depicted in the accompanying figures do not necessarily require the particular order shown, or sequential order, to achieve the desired results. In certain implementations, multitasking and parallel processing may be advantageous. Other variations are within the scope of the following claims.

### List of references

- 100: Software Environment
- 102, 104: Client
- 106, 108, 110: Application Server
- 113, 114, 115: Repository
- 116, 117, 118: Software Application
- 120: Network
- 130: Transaction Assistance Framework
- 131, 132, 133: Data Objects
- 134, 135: Graphical Analytics Viewers
- 140: Search Engine
- 142, 143, 144: Interface
- 147, 148, 149: Processor
- 152, 153, 154: Computer-readable Memory
- 160, 161: Graphical User Interface
- 205: Business Object
- 210: Kernel Layer
- 212: Attributes
- 220: Integrity Layer
- 222: Business Rules
- 224: Business Logic
- 226: Constraints
- 230: Interface Layer
- 232: Input Event Controls
- 234: Methods
- 236: Output Events
- 240: Access Layer
- 405: User Interface
- 408: Search Field
- 410: Interactive Menu
- 412: Window
- 414, 415, 424, 435: Graphical Analytics Viewer
- 416: Action Button
- 418a, 418b, 418c, 418d: References to one or more data objects
- 420: First attribute
- 422: Submenu for first attribute
- 426, 428: Submenu
- 430: Attribute
- 432: Submenu for second attribute
- 436: Third attribute
- 438: Submenu for third attribute
- 440,442: Control
- 444: Save Control
- 446: Print Control
- 450,452: Fields
- 455: Listing of available transactional tasks
- 480: Window of SCM module
- 505: Transaction Assistance User Interface
- 508: Search Field
- 510: Interactive Menu
- 512: Window
- 514, 515: Graphical Analytics Interviewer
- 518, 519: Representation
- 520, 522, 524: Submenu
- 521: Graphical Analytics Interviewer
- 526, 534, 536, 538: value of attribute
- 530: Graphical Representation

## Claims

1. A computer-implemented method comprising:
identifying, in at least one machine-readable storage device, a set of data objects (131, 132, 133) in a corpus of data objects (131, 132, 133), wherein a particular software application (116, 117, 118) is adapted to perform a set of transactions on data objects (131, 132, 133) in the corpus of data objects (131, 132, 133);
identifying a plurality of common attributes (212), each common attribute shared by at least two data objects (131, 132, 133) in the set of data objects (131, 132, 133);
sending data configured to present an interactive menu of a set of attributes (212) in the identified plurality of common attributes (212) in a first portion of a graphical user interface (142, 143, 144) of a computing device;
dynamically selecting, from a plurality of graphical analytics viewer (134, 135)s maintained in at least one machine-readable storage device, at least one particular graphical analytics viewer (134, 135, 414, 415, 424, 435) for presentation in a second portion of the graphical user interface (142, 143, 144) of the computing device, each graphical analytics viewer (134, 135, 414, 415, 424, 435) in the plurality of graphical analytics viewers (134, 135, 414, 415, 424, 435) adapted to present a representation (518, 519, 530) of data objects (131, 132, 133) according to a particular analytics scheme of the graphical analytics viewer (134, 135), wherein the particular at least one graphical analytics viewer (134, 135, 414, 415, 424, 435) is identified as having an analytics scheme related to at least one attribute included in the set of attributes (212);
providing, using at least one computing device, a presentation of the at least one particular graphical analytics viewer (134, 135, 414, 415, 424, 435) including a graphical representation (518, 519, 530) of each data object in the set of data objects (131, 132, 133) according to the analytics scheme of the particular graphical analytics viewer (134, 135), wherein each representation (518, 519, 530) of a data object is selectable by a user through the graphical user interface (142, 143, 144);
receiving data identifying a user selection of a particular representation (518, 519, 530) of a particular data object included in the presentation of the at least one particular graphical analytics viewer (134, 135);
receiving data identifying a user request to initiate at least one particular transaction in the set of transactions on the selected particular data object; and
initiating the at least one particular transaction on the particular data object by the particular software application (116, 117, 118).

2. The method of claim 1, further comprising:
identifying the at least one transaction in the set of transactions as capable of being performed on the particular data object by the particular software application (116, 117, 118);
sending an identification of the identified at least one particular transaction for display on the graphical user interface (142, 143, 144) of the computing device; and
wherein the user request to initiate the at least one transaction corresponds to a user selection of the at least one particular transaction displayed on the graphical user interface (142, 143, 144).

3. The method of any of the previous claims, wherein the identification of the at least one particular transaction is displayed on the graphical user interface (142, 143, 144) in connection with the presentation of the particular graphical analytics viewer (134, 135, 414, 415, 424, 435) and in response to the user selection of the particular representation (518, 519, 530) of the particular data object.

4. The method any of the previous claims, wherein the method further comprises:
receiving a user selection of at least one particular attribute included in the interactive menu (410) of the set of attributes (212); and
filtering the set of data objects (131, 132, 133) to produce a filtered set of data objects (131, 132, 133) based on the user selection of the at least one particular attribute.

5. The method of any of the previous claims, wherein the method further comprises a dynamically updating of the presentation of the at least one particular graphical analytics viewer (134, 135, 414, 415, 424, 435) based on the filtering of the set of data objects (131, 132, 133).

6. The method of any of the previous claims, wherein updating the presentation of the at least one particular graphical analytics viewer (134, 135, 414, 415, 424, 435) includes selecting a second graphical analytics viewer (134, 135, 414, 415, 424, 435) from the plurality of graphical analytics viewers (134, 135, 414, 415, 424, 435) for presentation using the graphical user interface (142, 143, 144), wherein selecting the second graphical analytics viewer (134, 135, 414, 415, 424, 435) includes dynamically identifying that an analytics scheme of the second graphical analytics viewer (134, 135, 414, 415, 424, 435) corresponds to the selected at least one particular attribute, wherein the presentation of the at least one particular graphical analytics viewer (134, 135, 414, 415, 424, 435) is updated to include presentation of the selected second graphical analytics viewer (134, 135).

7. The method of any of the previous claims, wherein presentation of the selected second graphical analytics viewer (134, 135, 414, 415, 424, 435) includes:
predicting that the selected second graphical analytics viewer (134, 135, 414, 415, 424, 435) is more relevant to the selected at least one attribute than a previously-presented graphical analytics viewer (134, 135, 414, 415, 424, 435) in the at least one particular graphical analytics viewer (134, 135); and
replacing presentation of the previously-presented graphical analytics viewer (134, 135, 414, 415, 424, 435) with presentation of the selected second graphical analytics viewer (134, 135).

8. The method of any of the previous claims, wherein the method further comprises identifying a plurality of sub-attributes (212) of the selected at least one particular attribute, wherein the interactive menu is supplemented with at least a portion of the plurality of sub-attributes (212).

9. The method of claim 8, further comprising:
receiving data identifying a user selection of at least one particular sub-attribute in the plurality of sub-attributes (212) through the interactive menu;
filtering the filtered set of data objects (131, 132, 133) to produce a second filtered set of data objects (131, 132, 133) based on the user selection of the at least one particular sub-attribute; and
dynamically updating the presentation of the at least one particular graphical analytics viewer (134, 135, 414, 415, 424, 435) based on the filtering of the filtered set of data objects (131, 132, 133) based on the user selection of the at least one particular sub-attribute.

10. The method any of the previous claims, wherein the set of data objects (131, 132, 133) in the corpus of data objects (131, 132, 133) satisfy a particular user search query entered in connection with the particular software application (116, 117, 118).

11. The method of claim 10, wherein the particular user search query is a natural language query describing a business scenario.

12. The method of any of the previous claims 10 to 11, wherein the set of attributes (212) is a first set of attributes (212), the user search query is a first user search query, and the set of data objects (131, 132, 133) is a first set of data objects (131, 132, 133), the method further comprising:
identifying, in at least one machine-readable storage device, a second set of data objects (131, 132, 133) in the corpus of data objects (131, 132, 133) that satisfy a second user search query entered in connection with a second software application (116, 117, 118) adapted to perform a second set of transactions on data objects (131, 132, 133) in the corpus of data objects (131, 132, 133);
identifying a second set of attributes (212) including attributes (212) identified as shared by data objects (131, 132, 133) in the second set of data objects (131, 132, 133);
dynamically selecting, from the plurality of graphical analytics viewers (134, 135, 414, 415, 424, 435), at least one second graphical analytics viewer (134, 135, 414, 415, 424, 435) for presentation in the graphical user interface (142, 143, 144) of the computing device, wherein the at least one second graphical analytics viewer (134, 135, 414, 415, 424, 435) has an analytics scheme identified as related to at least one attribute included in the second set of attributes (212), and presentation of the second graphical analytics viewer (134, 135, 414, 415, 424, 435) includes a graphical representation (518, 510, 530) of each data object in the second set of data objects (131, 132, 133) according to the analytics scheme of the second graphical analytics viewer (134, 135);
receiving data identifying a user selection of a particular representation (518, 519, 530) of a data object in the second set of data objects (131, 132, 133) included in the presentation of the second graphical analytics viewer (134, 135);
receiving data identifying a user request to initiate at least one particular transaction in the second set of transactions on the selected data object in the second set of data objects (131, 132, 133); and
initiating the at least one particular transaction in the second set of transactions on the selected data object in the second set of data objects (131, 132, 133) by the second software application (116, 117, 118).

13. The method of claim 12, wherein the second set of attributes (212) includes at least one data object attribute not included in the first set of attributes (212).

14. The method of any of the previous claims 12 to 13, wherein the first user search query is substantially the same as the second user search query and the first set of data objects (131, 132, 133) includes at least one data object not included in the second set of data objects (131, 132, 133).

15. The method of any of the previous claims, further comprising:
receiving data identifying a user request to change presentation of the at least one particular graphical analytics viewer (134, 135), the user request to change presentation of the at least one particular graphical analytics viewer (134, 135, 414, 415, 424, 435) including identification of a user-selected graphical analytics viewer (134, 135, 414, 415, 424, 435) from the plurality of graphical analytics viewers (134, 135, 414, 415, 424, 435); and
providing data for use in updating the presentation of the at least one particular graphical analytics viewer (134, 135, 414, 415, 424, 435) to include presentation of the user-selected graphical analytics viewer (134, 135).

16. The method of any of the previous claims, wherein the plurality of graphical analytics viewers (134, 135, 414, 415, 424, 435) includes at least two of a pie chart viewer, an e-commerce viewer, a map viewer, a radar chart viewer, a bubble chart viewer, a timeline viewer, and a bar chart viewer.

17. The method of any of the previous claims, wherein the selected particular data object is stored in at least one in-memory structure, wherein the at least one in-memory structure is adapted to perform the following steps of the method:
- receiving a set of the selected particular data objects (131, 132, 133) from the corpus of the data objects (131, 132, 133) after an execution of an initial operation, wherein the initial operation is initiated within a transaction assistance framework (130), wherein the initial operation is of an analytical type, wherein the initial operation selects the set of the selected particular data objects (131, 132, 133) according to at least one attribute, wherein the at least one attribute is associated with at least one selected particular data object of the set of the selected particular data objects (131, 132, 133),
- providing the selected particular data object for at least one subsequent operation, wherein the second operation is initiated within the transaction assistance framework (130), wherein the second operation is:
- of the analytical type, wherein the at least one subsequent operation differs from the initial operation in a selection of the at least one attribute and/or of the selected at least one particular sub-attribute, or
- providing the selected particular data object for one particular transaction in the set of transactions within the particular software application (116, 117, 118) on the selected particular data object, wherein the one particular transaction is initiated within the transaction assistance framework (130) and executed in the particular software application (116, 117, 118),
- receiving the selected particular data object from the at least one subsequent operation or the one particular transaction.

18. The method of any of the previous claims, wherein the method comprises the following steps:
providing at least one data repository (113, 114, 115), each repository (113, 114, 115) including at least one machine-readable storage device, at least one repository (113, 114, 115) storing:
a plurality of data objects (131, 132, 133);
a plurality of graphical analytics viewers (134, 135, 414, 415, 424, 435);
providing at least one application server (108, 108, 110), each application server (106, 108, 110) including at least one processor (147, 148, 149) and at least one machine-readable storage device storing a plurality of software applications (116, 117, 118), each software application (116, 117, 118) in the plurality of software applications (116, 117, 118) adapted to perform a set of transactions on at least one data object in the plurality of data objects (131, 132, 133);
providing a search engine (140) adapted to identifying a set of data objects (131, 132, 133) in the plurality of data objects (131, 132, 133) that satisfy a particular user search query entered in connection with a particular software application (116, 117, 118) in the plurality of software applications (116, 117, 118); and
providing a transaction assistance framework (130) implemented on at least one computer, the transaction assistance framework (130) operable to interact with the at least one data repository (113, 114, 115) and perform operations comprising:
identifying a plurality of common attributes (212), each common attribute shared by two or more data objects (131, 132, 133) in the set of data objects (131, 132, 133);
sending data configured to present an interactive menu of a set of attributes (212) in the identified plurality of common attributes (212) in a first portion of a graphical user interface (142, 143, 144) of a computing device;
dynamically selecting, from a plurality of graphical analytics viewers (134, 135) maintained in at least one machine-readable storage device, at least one particular graphical analytics viewer (134, 135, 414, 415, 424, 435) for presentation in a second portion of the graphical user interface (142, 143, 144) of the computing device, each graphical analytics viewer (134, 135, 414, 415, 424, 435) in the plurality of graphical analytics viewers (134, 135, 414, 415, 424, 435) adapted to present a representation (518, 519, 530) of data objects (131, 132, 133) according to a particular analytics scheme of the graphical analytics viewer (134, 135), wherein the particular at least one graphical analytics viewer (134, 135, 414, 415, 424, 435) is identified as having an analytics scheme related to at least one attribute included in the set of attributes (212);
providing, using at least one computing device, a presentation of the at least one particular graphical analytics viewer (134, 135, 414, 415, 424, 435) including a graphical representation (518, 519, 530) of each data object in the set of data objects (131, 132, 133) according to the analytics scheme of the particular graphical analytics viewer (134, 135), wherein each representation (518, 519, 530) of a data object is selectable by a user through the graphical user interface (142, 143, 144);
receiving data identifying a user selection of a particular representation (518, 519, 530) of a particular data object included in the presentation of the at least one particular graphical analytics viewer (134, 135);
receiving data identifying a user request to initiate at least one particular transaction in the set of transactions on the selected particular data object; and
initiating the at least one particular transaction on the particular data object by the particular software application (116, 117, 118).

19. An article comprising a non-transitory, machine-readable storage device storing instructions operable to cause at least one processor (147, 148, 149) to perform operations comprising:
identifying a set of data objects (131, 132, 133) in a corpus of data objects (131, 132, 133) in connection with a particular software application (116, 117, 118) adapted to perform a set of transactions on data objects (131, 132, 133) in the corpus of data objects (131, 132, 133);
identifying a plurality of common attributes (212), each common attribute shared by two or more data objects (131, 132, 133) in the set of data objects (131, 132, 133);
sending data configured to present an interactive menu of a set of attributes (212) in the identified plurality of common attributes (212) in a first portion of a graphical user interface (142, 143, 144) of a computing device;
dynamically selecting, from a plurality of graphical analytics viewers (134, 135, 414, 415, 424, 435), at least one particular graphical analytics viewer (134, 135, 414, 415, 424, 435) for presentation in a second portion of the graphical user interface (142, 143, 144) of the computing device, each graphical analytics viewer (134, 135, 414, 415, 424, 435) in the plurality of graphical analytics viewers (134, 135) adapted to present a representation (518, 519, 530) of data objects (131, 132, 133) according to a particular analytics scheme of the graphical analytics viewer (134, 135), wherein the particular at least one graphical analytics viewer (134, 135, 414, 415, 424, 435) is identified as having an analytics scheme related to at least one attribute included in the set of attributes (212);
providing for presentation of the at least one particular graphical analytics viewer (134, 135, 414, 415, 424, 435) including a graphical representation (518, 519, 530) of each data object in the set of data objects (131, 132, 133) according to the analytics scheme of the particular graphical analytics viewer (134, 135), wherein each representation (518, 519, 530) of a data object is selectable by a user through the graphical user interface (142, 143, 144);
receiving data identifying a user selection of a particular representation (518, 519, 530) of a particular data object included in the presentation of the at least one particular graphical analytics viewer (134, 135);
receiving data identifying a user request to initiate at least one particular transaction in the set of transactions on the selected particular data object; and
initiating the at least one particular transaction on the particular data object by the particular software application (116, 117, 118).

20. A computer program product comprising computer executable instructions to perform the method steps as claimed in any of the previous method claims.

21. A system comprising:
at least one data repository (113, 114, 115), each repository (113, 114, 115) including at least one machine-readable storage device, the at least one repository (113, 114, 115) storing:
a plurality of data objects (131, 132, 133);
a plurality of graphical analytics viewers (134, 135);
at least one application server (106, 108, 110), each application server (106, 108, 110) including at least one processor (147, 148, 149) and at least one machine-readable storage device storing a plurality of software applications (116, 117, 118), each software application (116, 117, 118) in the plurality of software applications (116, 117, 118) adapted to perform a set of transactions on at least one data object in the plurality of data objects (131, 132, 133);
a search engine (140) adapted to identifying a set of data objects (131, 132, 133) in the plurality of data objects (131, 132, 133) that satisfy a particular user search query entered in connection with a particular software application (116, 117, 118) in the plurality of software applications (116, 117, 118); and
a transaction assistance framework (130) implemented on at least one computer, the transaction assistance framework (130) operable to interact with the at least one data repository (113, 114, 115) and perform operations comprising:
identifying a plurality of common attributes (212), each common attribute shared by two or more data objects (131, 132, 133) in the set of data objects (131, 132, 133);
sending data configured to present an interactive menu of a set of attributes (212) in the identified plurality of common attributes (212) in a first portion of a graphical user interface (142, 143, 144) of a computing device;
dynamically selecting, from a plurality of graphical analytics viewers (134, 135) maintained in at least one machine-readable storage device, at least one particular graphical analytics viewer (134, 135, 414, 415, 424, 435) for presentation in a second portion of the graphical user interface (142, 143, 144) of the computing device, each graphical analytics viewer (134, 135, 414, 415, 424, 435) in the plurality of graphical analytics viewers (134, 135) adapted to present a representation (518, 519, 530) of data objects (131, 132, 133) according to a particular analytics scheme of the graphical analytics viewer (134, 135), wherein the particular at least on graphical analytics viewer (134, 135, 414, 415, 424, 435) is identified as having an analytics scheme related to at least one attribute included in the set of attributes (212);
providing, using at least one computing device, a presentation of the at least one particular graphical analytics viewer (134, 135, 414, 415, 424, 435) including a graphical representation (518, 519, 530) of each data object in the set of data objects (131, 132, 133) according to the analytics scheme of the particular graphical analytics viewer (134, 135), wherein each representation (518, 519, 530) of a data object is selectable by a user through the graphical user interface (142, 143, 144);
receiving data identifying a user selection of a particular representation (518, 519, 530) of a particular data object included in the presentation of the at least one particular graphical analytics viewer (134, 135);
receiving data identifying a user request to initiate at least one particular transaction in the set of transactions on the selected particular data object; and
initiating the at least one particular transaction on the particular data object by the particular software application (116, 117, 118).

22. The system of claim 21, wherein the system further comprises at least one in-memory structure, wherein at least one in-memory structure is adapted to store the selected particular data object, wherein the at least one in-memory structure is further adapted to:
- receive a set of the selected particular data objects (131, 132, 133) from the corpus of the data objects (131, 132, 133) after an execution of an initial operation of the operations, wherein the initial operation is initiated within the transaction assistance framework (130), wherein the initial operation is of an analytical type, wherein the initial operation selects the set of the selected particular data objects (131, 132, 133) according to at least one attribute, wherein the at least one attribute is associated with at least one selected particular data object of the set of the selected particular data objects (131, 132, 133), and
- provide the selected particular data object for at least one subsequent operation of the operations, wherein the second operation is initiated within the transaction assistance framework (130), wherein the second operation is of the analytical type, wherein the at least one subsequent operation differs from the initial operation in a selection of the at least one attribute and/or of the selected at least one particular sub-attribute, or
- providing the selected particular data object for one particular transaction in the set of transactions within the particular software application (116, 117, 118) on the selected particular data object, wherein the one particular transaction is initiated within the transaction assistance framework (130) and executed in the particular software application (116, 117, 118), and
- receiving the selected particular data object from the at least one subsequent operation or the one particular transaction.

23. The system of any of the previous claims 21 to 22, wherein the plurality of data objects (131, 132, 133) comprise a plurality of business objects (205).

24. The system of any of the previous claims 21 to 23, wherein the at least one application server (106, 108, 110) is a server in an enterprise software system and the plurality of software applications (116, 117, 118) comprise a plurality of enterprise software services.

25. The system of any of the previous claims 21 to 24, wherein the search engine (140) is integrated with a transaction launching engine.

26. The system of any of the previous claims 21 to 25, wherein functionality of the transaction assistance framework (130) is integrated with at least one software application (116, 117, 118) in the plurality of software applications (116, 117, 118).
